# EUROPEAN PATENT APPLICATION

(11) **EP 2 858 304 A1**
(43) Date of publication of application: **08.04.2015**
(21) Application number: 13187269.9
(22) Date of filing: 03.10.2013
(51) Int. Cl.: H04L 12/28

(54) **A gateway device for receiving and redistributing media content in a home media network**

(71) Applicant: OpenTV, Inc., San Francisco, CA 94111 (US)
(72) Inventor: Delpuch, Alain, 75013 Paris (FR); Pierre, Ludovic, 92130 Issy les Moulineaux (FR)
(74) Representative: Leman Consulting S.A.

(57) **Abstract**

The present invention relates to a home gateway device and a home media network comprising the home gateway device, wherein the home gateway device is adapted to use slave media clients within the home media network to display an announcement message, thereby allowing for an intercom function within the home network. A mobile communications device having a wireless connection to the home gateway device is used to provide the announcement message to be displayed on one or more media clients within the home media network.

## Description

### TECHNICAL DOMAIN

The present disclosure generally relates to the domain of media content consumption, especially within a home media network wherein a gateway device acts as a media server for slave media client devices within the home.

### STATE OF THE ART

Intercom systems exist in the state of the art, allowing an announcer to communicate a message to one or more recipients in real time. For example, in a hospital a message of general interest to a plurality of occupants within the hospital or of particular interest to one or more from the plurality of occupants within the hospital may be broadcast by an announcer over a dedicated paging system whereby the announcer's message is broadcast at various points throughout the hospital.

The above example requires that a dedicated paging system be installed within the environment where the announcements are to be broadcast or otherwise delivered. Recognising that already-installed media-playing devices could be "borrowed" for the purpose of providing an intercom or announcement function, United States Patent Application Publication number 2011/0161839 A1 proposes the use of an existing home media network within a customer's premises to allow a subscription television provider of content and services to provide intercom and/or chat functionality between media-playing devices (i.e. media clients) in multiple locations within a home network to facilitate intercom and/or chat features on display devices. A media client can be, for example, a set top box (STB), a digital television set (DTV), a digital video recorder (DVR), a personal computer, a mobile telephone or a personal digital assistant (PDA).

The prior art therefore includes means for allowing the subscription television provider of content and services to provide the intercom and/or chat functionality between media clients within the home network when the media clients have been adapted to perform the intercom and/or chat functionality or when a backend server pertaining to the provider of content and services has been adapted to perform the intercom and/or chat functionality in the case that the home network comprises legacy media clients which have not been adapted as above.

### BRIEF SUMMARY OF THE INVENTION

In order to address some of the problems with prior art implementation of message alerting within a home media network, according to a first aspect, the present invention provides for a gateway device for a domestic media network, the gateway device operable to receive media content and to further redistribute at least part of the received media content to at least one media client device within the domestic media network, the at least one media client device having access to a rendering device for rendering media content, **characterised in that**:
the gateway device is configured to receive further media content comprising an alert message from a communications device and to insert the alert message into the redistributed media content relative to the at least one media client.

According to a further aspect of the present invention, there is provided a domestic media network comprising a gateway device as described above, the domestic media network further comprising at least one media client device operably coupled to a rendering device for rendering media content received from the domestic media network and at least one communications device configured to edit and send further media content destined for at least one of the media client devices, the further media content comprising an alert message.

According to a still further aspect, provision is made in the present invention for a method for rendering an alert message on at least one rendering device, the rendering device being operably coupled to a media client device in a domestic media network comprising:
the at least one media client device;
a gateway device for receiving media content and for further redistributing at least part of the received media content at least to the media client device; and
a communications device configured to send further media content comprising an alert message destined for at least one of the media client devices;
the method comprising:
editing the alert message using the communications device;
compiling the further media content comprising the alert message;
sending the further media content to the gateway device;
extracting, by the gateway device, the alert message from the further media content; and
inserting, by the gateway device, the alert message into the redistributed media content for rendering on the rendering device.

The present invention therefore allows for one or more legacy media clients in one or more locations within a home media network to be used without any particular retrofitting or adaptation, to receive an alert message from an originator using a communications device, the message being relayed via a gateway within the home media network, without any particular intervention by the provider of content and services. Content or services, such as audio/video content, internet content or games, may be interrupted during the presentation of the alert message and resumed at a later time.

In this way, a broadcast announcement can be presented at various locations throughout an existing home media network, without requiring a stand-alone announcement system, simply by using existing media clients which would otherwise be switched on anyway (or which could be remotely switched on should it be necessary).

### BRIEF DESCRIPTION OF THE DRAWINGS

The present invention will be better understood thanks to the detailed description which follows and the accompanying drawings, which are given as non-limiting examples of embodiments of the invention, namely:

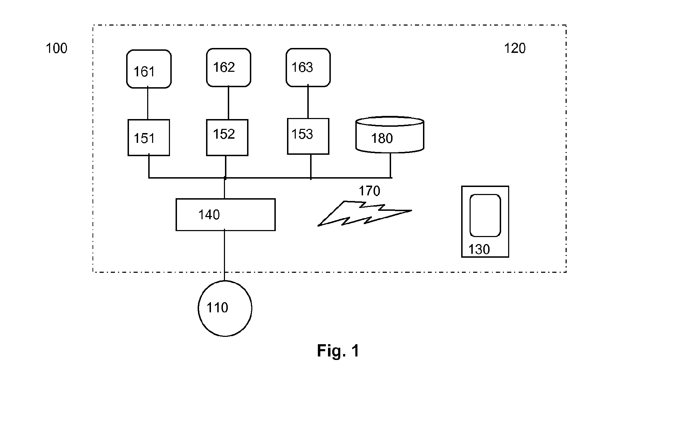

Fig. 1, showing a system in which an embodiment of the present invention may be deployed;

### DETAILED DESCRIPTION

Fig. 1 shows a schematic diagram of a system (100) in which an embodiment of the present invention may be deployed. A remote content provider (110) distributes media content to a home media network (120) among one or more home media networks. The media content is received by a gateway device (140) within the home media network (120). By home media network it is meant a local network of the type generally used within a home, a building comprising a plurality of homes or a small office or group of offices for example. As such, a home media network may also be referred to as a domestic media network. The gateway device (140) is configured to function as a media server for redistributing received media content to a plurality of slave media clients located in various rooms throughout the home. The gateway device (140) thereby redistributes the media content to at least one media client device (151, 152, 153) within the home media network (120). Media clients (151, 152, 153) may be any of a digital television set, a set top box (STB) or a personal computer for example. When the media client (151, 152, 153) does not comprise a display device for displaying the received content, the media client (151, 152, 153) is operably connected to a display device (161, 162, 163) so that media consumers may view and/or listen to the thus-redistributed media content. In more general terms the display device may be a rendering device (161, 162, 163), where either of audio or audio/video media content may be suitably rendered.

Fig. 1 shows the content provider (110) as being remote from the home media network, meaning that the content redistributed by the gateway device would come from outwith the home media network, but according to some embodiments of the present invention, the content to be redistributed may come from within the home media network instead of coming from the remote content provider. For example, the content to be redistributed may reside on a storage device within the home media network.

The system further comprises a mobile communications device (130), such as a mobile telephone or a tablet computer, running an application which is adapted to control the gateway device (140). The mobile communications device (130) is configured to communicate with the gateway device (140) via a wireless connection (170) such as a WiFi connection complying with IEEE Specification 802.11.

An announcer wishes to make an announcement or an alert to either one consumer or a plurality of consumers at their respective locations within the home, said consumers viewing and/or listening to one or more different media contents having been redistributed, by the gateway device, to their respective media clients.

According to the embodiment, the gateway device is adapted to respond to particular commands from the mobile communications device, the particular commands operable to interrupt playing of content on one or more client devices and to substitute an announcement or alert specified by the announcer. The announcer therefore uses the mobile communications device to edit or otherwise create an alert message, which could be text, audio or audio/video. He then selects one or more client devices to receive the message and, using the application, formulates a command to be sent to the gateway device. The gateway device then sends the alert to the identified (selected) client device(s), interrupting whatever content they were playing and replacing it with the alert message.

For example, in a given household having a home media network with a gateway device and a plurality of media playing devices, several household members are watching media content in their respective rooms. Each member may be watching different media content, either live or recorded, since the content is that which is redistributed by the gateway device and may include streaming content from a provider or recorded content having previously been stored onto a storage medium (180) somewhere within the home media network (120). All or part of the storage medium (180) may be comprised within the gateway device (140) as long as it is the gateway device which delivers the viewed recorded content from the storage medium to the media playing device. It is lunch time and the father, who has just finished preparing lunch, from the kitchen, uses his tablet computer (or mobile telephone) and launches an application which allows him to grab (with the tablet's/telephone's camera and microphone) and broadcast a live video announcement to all of the active media playing devices in the house, saying: "Lunch is ready, everybody! Look at what I have prepared!", while each media playing device, instead of continuing to play the media content that they were playing, is consequently paused. The application on the mobile communications device grabs and uploads the video to the gateway via Wifi and the gateway, adapted according to an embodiment of the present invention. The gateway device inserts the live video announcement seamlessly instead of the video it was serving before to each slave device. While the alert announcement (live video) is being sent to the client device by the gateway device, the gateway device will interrupt the sending of the content which was originally being sent to the client device. The alert announcement will then be sent. Sending of the original content from the gateway device to the client device(s) will resume where it left off when the alert announcement ends because the gateway, adapted according to embodiments of the present invention, is in charge of serving the content to each of the media players in the home media network. The amount of time that the announcement appears is also managed by the gateway under control of the announcer. Any of the known techniques for performing pause and resume of media content playing can be used.

The alert messaging scenario made possible by the embodiment of the present invention described above will not work for a particular consumer when that consumer's client device (e.g. STB) is switched off. Neither will it work when the particular consumer is using his client device (e.g. a computer) to browse photos which are resident on the computer's own hard disc for example, since the gateway cannot control the interrupt and replacement of the photos with the alert message and the subsequent resumption of photo browsing. Similarly it will not work for the consumer who is browsing the web or playing a "stand-alone" game when the alert message arrives.

According to another embodiment, instead of a mobile communication device described above, the announcer may use any suitably adapted computing device, such as a personal computer to edit or otherwise create the alert message. In this case, when carrying out the method of the invention, the computing device need not use a wireless connection such as a WiFi connection complying with IEEE Specification 802.11 to communicate with the gateway device, but rather may use any other type of wired connection to do so. In this manner, the computing device may not be required to be inside the same premises where the home network is located but rather may connect to the home network from outside the premises. For example, in the scenario given above, the father may prepare and/or send an alert message from his office, or from the supermarket, to any or all of the consumers within the home network. According to other variants, any type of device having the capabilities of a computing device may be used, whether wired or wireless. For example, in a household having a home media network there could be an appliance attached to the network such as a fridge for example. Intelligent fridges may be configured to have an interface peripheral allowing a user to edit an alert message. The fridge may send the message to the gateway of the present invention as described above. Since the fridge can communicate with the gateway device it can be taken to be a communications device in the context of the present invention. It follows that non-mobile communications devices may be used in embodiments of the present invention.

A collaborative trade organisation known as The Digital Living Network Alliance (DLNA) provides a set of guidelines to enable sharing of digital media between multimedia devices. Devices which are adapted to implement the DLNA devices are separated into classes, which include Digital Media Servers (DMS) for storing content and making it available to other devices within the network and Digital Media Players (DMP) for finding content on Digital Media Servers and providing playback and rendering capabilities for that content. DMS devices include personal computers or home gateway devices functioning as media servers. DMP devices include TVs, STBs, stereos, home theatres, wireless monitors and game consoles and are known as slave devices or media clients. DLNA guidelines do not allow for the message alert system described as part of the present invention to be implemented. The present invention may be realised without modification to the DLNA guidelines.

If DLNA technology is being used within the home media network, embodiments of the present invention can be realised using off-the-shelf DLNA DMP slave devices, whereas the DLNA DMS device requires to be adapted to perform the alert messaging scheme of the present invention. No proprietary mechanism is required to be added to the DLNA protocol.

According to another embodiment of the present invention, it is possible to switch on a slave device if it is in sleep mode for example or otherwise waking it up if it is off. This embodiment has all the features of the embodiments described above but further requires that the slave devices be able to receive the necessary command from the specially adapted gateway device to perform the switch-on. For example, a known standard called WoL (Wake-on LAN) is an Ethernet computing standard (similar to DLNA) which allows the slave device to be turned on or otherwise awakened by a network message sent from the gateway device. In this embodiment, using WoL, a WoL message is sent by the gateway device to one or more slave devices. The person who wants to broadcast a live video announcement (the announcer) uses his computing device or mobile communications device to indicate which target slave device or devices (or all slave devices) the announcement is to be sent to. An application in the computing device or mobile communications device is used to allow the user to enter or otherwise select the target devices, to create the announcement message and to communicate with the gateway device. Among the target devices there may be some which are on while others may be off. The gateway typically knows which device is on or off. Consequently, for the devices known to be off, prior to sending the announcement the gateway device includes a WoL message to first wake up the device. (In the case where the gateway device is of a wireless type, the gateway sends WoWLAN Wake-on Wireless LAN messages rather than WoL messages). When the slave device is a set-top box attached to a TV and it is the TV which goes into sleep mode or is switched off, the TV can be woken up or switched on by the set-top box since such functions can be conveniently performed using High-Definition Multimedia Interface (HDMI) Consumer Electronics Control (CEC) commands. HDMI CEC is an industry standard which allows a user to control up to fifteen devices connected through HDMI using only one of their remote control devices.

According to a further embodiment, instead of the alert message interrupting the playback of the content being watched the alert message can be played in a picture-in-picture mode. In this embodiment, the gateway device is further configured to compose the alert message as a picture-in-picture content wherein the alert message is merged with the source content. The combined alert message and source content are then sent to the client device as a merged content for subsequent rendering.

It is to be noted that picture-in-picture mode is a particular technique for simultaneously rendering a plurality of different contents. Any of the known techniques may be used for simultaneously rendering a plurality of different contents may be used in an embodiment of the present invention which requires such rendering. Other examples of these techniques include split-screen (e.g. 50:50, with top half: bottom half split or right:left split), transparency techniques where one picture is superimposed over another allowing the viewer to see through one picture to the other, etc.

According to yet another embodiment, requiring this time that the slave devices be specially adapted as well as the gateway device, instead of the alert message interrupting the playback of the content being watched the alert message can be played in a picture-in-picture mode. In this embodiment, the receiver (person receiving the alert message) will be able to see/hear the alert message even if he is browsing photos which are resident on the slave device's own hard disc for example, since the gateway does not need to interrupt the photo browsing, it only has to send the alert message. Similarly, the recipient of the message will be able to hear/see the alert message even if he is browsing the web or playing a "stand-alone" game when the alert message arrives thanks to the client device being configured to perform the picture-in-picture merge with the content it was already showing when it received the alert message from the gateway device.

Any of the previously described embodiments can be configured to broadcast the announcement to all of the slave devices in the home media network or an announcement, perhaps even a customised message intended specifically for a particular receiver, may be addressed to a particular slave device. This would be useful for example where the mother of the household, knowing that Samantha is still watching a film in her room, can take her mobile phone and send Samantha a message: "Time to do your homework", which will appear on her TV screen.

Embodiments of the present invention could find use in any place where a so-called home media network may be installed, for example in hospital waiting rooms, in airports, in restaurants or bars, in company offices or in hotels. The distribution medium from the gateway device to the slave devices could be IP-based or coax-based.

## Claims

1. A gateway device (140) for a domestic media network (120), the gateway device (140) operable to receive media content and to further redistribute at least part of the received media content to at least one media client device (151, 152, 153) within the domestic media network (120), the at least one media client device (151, 152, 153) having access to a rendering device (161, 162, 163) for rendering media content; **characterised in that**:
the gateway device (140) is configured to receive further media content comprising an alert message from a communications device (130) and to insert the alert message into the redistributed media content relative to the at least one media client (151, 152, 153).

2. The gateway device (140) according to claim 1, wherein the gateway device (140) is further configured to insert the alert message into the redistributed content relative to all of the media client devices (151, 152, 153) in the media network (120) which have access to rendering devices (161, 162, 163).

3. The gateway device (140) according to any of the preceding claims, wherein the gateway device is configured to receive the further media content comprising an alert message via a wireless connection.

4. The gateway device (140) according to either of claims 1 or 2, wherein the gateway device is configured to receive the further media content comprising an alert message via a wired connection.

5. The gateway device (140) according to any of the preceding claims, wherein the gateway device is configured to perform said insertion by: pausing said redistribution of received media content; redistributing the alert message; and resuming the redistribution of the received media content.

6. The gateway device (140) according to any of claims 1 to 4, wherein the gateway device is configured to perform said insertion by combining the received media content with the further media content.

7. The gateway device (140) according to any of the preceding claims, wherein the alert message comprises audio/video content.

8. A domestic media network (120) comprising a gateway device according to any of the preceding claims, the domestic media network (120) further comprising at least one media client device (151, 152, 153) operably coupled to a rendering device (161, 162, 163) for rendering media content received from the domestic media network and at least one communications device (130) configured to edit and send further media content destined for at least one of the media client devices, the further media content comprising an alert message.

9. A method for rendering an alert message on at least one rendering device (161, 162, 163), the rendering device being operably coupled to a media client device (151, 152, 153) in a domestic media network (120) comprising:
the at least one media client device (151, 152, 153);
a gateway device (140) for receiving media content and for further redistributing at least part of the received media content at least to the media client device (151, 152, 153); and
a communications device (130) configured to send further media content comprising an alert message destined for at least one of the media client devices (151, 152, 153);
the method comprising:
editing the alert message using the communications device;
compiling the further media content comprising the alert message;
sending the further media content to the gateway device;
extracting, by the gateway device, the alert message from the further media content; and
inserting, by the gateway device, the alert message into the redistributed media content for rendering on the rendering device.

10. The method according to claim 9, wherein said inserting comprises pausing the rendering of the redistributed content, playing of the alert message and resuming of the rendering of the redistributed content.

11. The method according to claim 9, wherein said inserting comprises simultaneously rendering the redistributed content and the alert message.
